# EUROPEAN PATENT SPECIFICATION

(11) **EP 1 893 801 B1**
(45) Date of publication and mention of the grant of the patent: **04.08.2010**
(21) Application number: 06758129.8
(22) Date of filing: 14.06.2006
(51) Int. Cl.: D06M 10/02

(54) **METHOD OF TREATMENT OF TEXTILE REINFORCING MATERIALS TO INCREASE THEIR ADHESION TO RUBBER COMPOUND**
VERFAHREN ZUR AUSRÜSTUNG VON TEXTILEN VERSTÄRKUNGSMITTELN MIT BESSERER KLEBFÄHIGKEIT GEGENÜBER GUMMI
PROCEDE DE TRAITEMENT POUR MATERIAUX RENFORCANTS POUR TEXTILES, DESTINE A AUGMENTER LEUR ADHESION A DES COMPOSES CAOUTCHOUTIQUES

(30) Priority: 17.06.2005 SK 732005
(43) Date of publication of application: 05.03.2008
(73) Proprietor: CONTINENTAL MATADOR RUBBER, S.R.O., 020 01 Púchov (SK)
(72) Inventor: JANYPKA, Petr, 020 01 Puchov (SK); SURIOVA, Viera, 020 01 Puchov (SK); JASSO, Michal, 94 104 Mojzesovo (SK); KRUMP, Henrich, 020 01 Puchov (SK); HUDEC, Ivan, 851 05 Bratislava (SK); CERNAK, Mirko, 841 08 Bratislava (SK); ONDAS, Miroslav, 020 01 Puchov (SK); STAHEL, Pavol, 69 974 Javornik (CZ)
(74) Representative: Majlingova, Marta
(86) International application number: PCT/SK2006/000014
(87) International publication number: WO 2006/135347

(56) References cited:
- EP-A- 0 168 131
- EP-A- 0 172 057
- DATABASE WPI Section Ch, Week 199145 Derwent Publications Ltd., London, GB; Class A23, AN 1991-329340 XP002396804 & JP 03 220369 A (TEIJIN LTD) 27 September 1991 (1991-09-27)
- H.HIRATSUKA: "Plasma Polymerization of some simpe saturated hydrocarbons" JOURNAL OF APPLIED POLYMER SCIENCE, vol. 22, 1978, pages 917-925, XP002396803

## Description

### Technical Field

The invention concerns utilization of low temperature plasma at atmospheric pressure in the process of plasma polymerization for surface treatment of polyester cords without previous adhesive modification, used in rubber products with the aim to increase their adhesion to rubber compound.

### Background Art

Surface treatment of reinforcing materials (polyester, viscose, polyamide, aramid materials) is realized at present on a basis of chemical adhesive modifications, in which an adhesive system is created fulfilling the function of a binder between the textile reinforcing material and rubber. The standard method is based on surface treatment of the textile reinforcing material with a dip coat, formed by an emulsion or suspension, consisting of resorcinol formaldehyde resin and rubber latex (RFL), and on subsequent thermal processing. It is assumed that resorcinol formaldehyde resin mediates adhesion of the surface of polymeric fibers to caoutchouc or rubber.

Between polyester fibers, which have insufficiently polar surface and are chemically rather inert, no chemical bonds to resorcinol resin are formed. Therefore, before their standard RFL adhesive modification some preadhesive modification of their surface is necessary.

The most common methods of preadhesive modification of polyester cords consist in treatment of the surface of polyester reinforcing material by a solution or suspension based on epoxy resins or isothiocyanates [DE 4,439,031; JP 08,158,261; JP 08,035,179; JP 08,060,555; JP 08,113,877]. A disadvantage of these methods is the fact that before vulcanization the reinforcing material must be twice dried and thermally processed, which is demanding both in time and energy. Moreover, these complicated methods do not ensure sufficient binding in applications requiring high adhesion, as is, for example, the use of polyester monofibers as reinforcement in high speed tires [JP 09, 078, 346; JP 08, 113, 017].

The firm AKZO NOBEL [B. Jelsma: "Exploitation of the potential of aramid" Tire Technol. Int. (1996) 146-48; and M.O. Webor and D. Schilo: "Surface activation of polyester and aramid to improve adhesion" J. Coated Fabr. 26 (1996) 131-136] has proposed an alternative procedure of surface activation of polyester and aramid fibers by fluorine. According to the results published in Ref. 9 such activation leads to substantial increase in number of polar groups at the fiber surface. Nevertheless, the resulting adhesion is lower than that achieved by the standard procedure in double dip coating. Moreover, using gaseous fluorine in gaseous phase is problematic both from environmental and technological point of view.

Recently, modification of polymeric surfaces by low temperature plasma [C.M. Chan, T.M. Ko and H. Hiraoka: "Polymer surface modification by plasmas and photons" Surface Sci. Reports 24 (1996) 1-54] seems to be favorable. Nevertheless, vast majority of applications of the method have been studied at low pressures of 10⁻⁵-10 Torr [C.M. Chan, T.M. Ko and H. Hiraoka: "Polymer surface modification by plasmas and photons" Surface Sci. Reports 24 (1996) 1-54; JP 03 220 368; JP 03 220 369; DE 19 609 804; M. Kaesemann et al.: "Plasma treatment of technical textiles: Effect of fiber-matrix bonding in fiber composites" DWI Report (1990) 117], at which the low temperature plasma, which is in direct contact with the surface of a polymeric textile material, is easily generated. Under technological conditions of the production of reinforcing materials for tires production, the surface treatment must be performed on continuous production lines without using expensive vacuum technology. High energy consumption, long necessary exposition periods and problems with the design of technological equipment based on laboratory experiments belong to further disadvantages of the application of plasma technology at low pressure.

An interesting attempt to realize the fabric surface activation at atmospheric pressure has been described in the paper [P.P. Tsai et al.: "Surface modification of fabric using a one-atmosphere glow discharge plasma to improve fabric wettability" Tex. Res. J 67 (1997) 359-69]. However, technological advantages of atmospheric pressure are impaired in this case by the necessity to use expensive inert gases.

As found in the publication of P.P. Shernam.: "Corona discharge treatment" IEEE Conf. IAS (1993) 1669-74, standard technologically widely used methods of surface activation of polymeric foils, based on the use of low temperature plasma generated by barrier and corona discharges [P.P. Shernam.: "Corona discharge treatment" IEEE Conf. IAS (1993) 1669-74; and K. Gerstenberg: "Plasma treatment at ambient pressure in practice" J. Oberflaech 36(1996) 44-6], are inapplicable in the processing of materials in the form of fibers, yarns or fabrics. It is caused by the fact that the textile form of a material does not allow formation of a strong dielectric layer between the electrodes. This would result in an unacceptably low energy deposited at the surface of the processed material. Moreover, plasma generated in this way has very limited contact with the material surface.

These disadvantages may be eliminated using methods consisting in generating low temperature plasma by pulse corona discharges. Under these conditions, the voltage at which undesirable "hot" spark discharge occurs is very much increased. Therefore, only electrons are accelerated, while energy of heavy ions is not increased. In this way, plasma is generated with high thermal energy of electrons and low temperature of ions and gas molecules. This is possible thanks to the use of pulse driving voltage having the following parameters:
1) pulse rise time less than 100-200 ns
2) pulse decay time less than 1 µs
3) peak electric field intensity higher than 10-20 kV/cm.

This method is already commercially used in the motor-car industry, for example in surface activation of polypropylenes automobile bumpers before painting. In comparison with the standard methods [P.P. Shernam.: "Corona discharge treatment" IEEE Conf. IAS (1993) 1669-74; and K. Gerstenberg: "Plasma treatment at ambient pressure in practice" J. Oberflaech 36 (1996) 44-6], the generated plasma is in close contact with the material surface, thus allowing considerably faster energy deposition on the material surface and processing times of the order of several seconds. However, known and patented equipments using this method cannot be used for processing monofibers, yarns and fabrics, because they require compact form of the material which forms dielectric barrier between the electrodes. At present, research work on application of this method to fabric materials is being performed in industrially developed countries.

Utilization of plasma discharge in the process thin film layers polymerization appears to be very interesting, where the thin layer is directly deposited on the substrate surface without any other treatments. In this process, transformation of low molecular weight molecules (monomers) to molecules of high molecular weight (polymer) takes place with the aid of plasma, which contains activated molecules, electrons, ions and radicals. In many cases, polymer formed by plasma polymerization has different chemical structure and chemical and physical properties than that formed by traditional polymerization. This uniqueness of polymers synthesized by means of plasma results from the reaction mechanism of the process of polymer formation. Thin film deposition by means of barrier plasma discharge using gases of various character (methane, ethane, propane, butane and monosilane) has been studied by the authors of the patent [EP 109 60 38]. Nevertheless, because of dielectric properties the authors of the above patent were forced to use plasma generated in vacuum. Barrier discharge has also been used in surface deposition of superalloys based on zirconium and yttrium oxides [EP 099 07 16].

Plasma polymerization at the surface of textile reinforcing materials initiated by low temperature plasma at atmospheric pressure with the aim to increase their adhesion to rubber eliminates negative effects of chemical adhesive modification on human living environment and, at the same time, it provides economic gain.

### Disclosure of Invention

The above disadvantages of the state of the art are eliminated by a method of treatment of textile reinforcing materials with the aim to increase their adhesion to rubber compound for application in tires, conveyor belts, as well as for products of technical rubber and V-belts, by low temperature plasma at atmospheric pressure, the subject-matter of which consists in that the textile material is treated without any preliminary preadhesive treatment by low temperature plasma generated at atmospheric pressure in a plasma chamber, into which a gas mixture of propane-butane with nitrogen is fed, while plasma polymerization at the surface of the treated textile material takes place.

The low temperature plasma at atmospheric pressure may be generated by means of corona discharge or by coplanar dielectric barrier discharge.

According to a preferred embodiment, the propane-butane flow rate through the plasma reactor may be in the range of 0.1 to 20 l/min and the nitrogen flow rate of 1 to 30 l/min.

It is preferred, if the material (cord yarns), the surface of which should be treated with plasma generated by corona discharge is moved through the plasma reactor at a constant rate.

The reinforcing material which is treated in the plasma reactor using coplanar dielectric barrier discharge for plasma generation, is surface treated under static conditions. Suitable materials for the treatment are both sheet?? cord textile fabric and single cord yarns.

The method of surface adhesion treatment of reinforcing materials by low temperature plasma in the process of plasma polymerization at atmospheric pressure may be performed:

### A) By means of corona discharge

In a plasma reactor, in which plasma is generated by means of corona discharge, plasma treatment of single cord yarns is possible.
1. before the plasma polymerization (subsequently also in the process of plasma treatment) a mixture of propane-butane/nitrogen is fed into the plasma reactor,
2. the reinforcing material to be treated is moved through the plasma reactor at a constant velocity in the direction cathode-anode,
3. by passing the anode opening low temperature plasma starts to act, subsequently initializing plasma polymerization, and thus formation of a new polymeric layer at the surface of the reinforcing material,
4. the treated reinforcing material is wound up on a reel and prepared to rubberizing by a rubber compound

### B) By means of coplanar dielectric barrier discharge

By means of coplanar dielectric barrier discharge, plasma treatment of cord yarns or sheet textile fabrics is possible.
1. before the plasma polymerization (subsequently also in the process of plasma treatment) a mixture of propane-butane/nitrogen is fed into the plasma reactor,
2. the reinforcing material to be treated is activated under static conditions,
3. by switching on the high voltage source low temperature plasma starts to art, subsequently initializing plasma polymerization, and thus formation of a new polymeric layer at the surface of the reinforcing material,
4. the treated reinforcing material is prepared to rubberizing by a rubber compound.

By the action of plasma polymerization on the surface of reinforcing materials, new polymeric layer arises, which contributes to improvement of adhesion between the reinforcing material and the rubber compound.

Application of plasma polymerization appears to be highly advantageous from this point of view, which is confirmed by the following advantages:
- in the process of plasma polymerization of reinforcing materials no harmful pollutants are released into environment in contrast to the case of chemical adhesive treatment, where formaldehyde is released, which burdens considerably the environment,
- after deposition of a new polymeric layer in the process of plasma polymerization at atmospheric pressure, the reinforcing materials do not exhibit lower values of physical-mechanical properties,
- replacement of chemical adhesive treatment and pretreatment by the plasma polymerization at atmospheric pressure presents considerable simplification of the technological process of reinforcing material preparation,
- as a final result, the reinforcing material treatment in the process of plasma polymerization at atmospheric pressure appears to be economically preferred compared with chemical methods of adhesive modifications.

### An overview of figures in the drawings

Examples of the invention embodiments are shown in the figures, in which:
Fig. 1a) shows a diagram of dependence of the influence of rate of cord yarn moved through the reactor and of monomer propane-butane flow rate on the values of adhesion strength at static conditions of polyester cord to rubber compound at the supplied voltage of 50 kV.
Fig. 1b) shows a diagram of dependence of the influence of rate of cord yarn moved through the reactor and of monomer propane-butane flow rate on the values of adhesion strength after dynamic stress of polyester cord to rubber compound at the supplied voltage of 50 kV.
Fig. 2a) shows a diagram of dependence of the influence of rate of cord yarn moved through the reactor and of monomer propane-butane flow rate on the values of adhesion strength at static conditions of polyester cord to rubber compound at the supplied voltage of 40 kV.
Fig. 2b) shows a diagram of dependence of the influence of rate of cord yarn moved through the reactor and of monomer propane-butane flow rate on the values of adhesion strength after dynamic stress of polyester cord to rubber compound at the supplied voltage of 40 kV.
Fig. 3a) shows a diagram of dependence of the influence of rate of cord yarn moved through the reactor and of monomer propane-butane flow rate on the values of adhesion strength at static conditions of polyester cord to rubber compound at the supplied voltage of 30 kV.
Fig. 3b) shows a diagram of dependence of the influence of rate of cord yarn moved through the reactor and of monomer propane-butane flow rate on the values of adhesion strength after dynamic stress of polyester cord to rubber compound at the supplied voltage of 30 kV.
Fig. 4a) shows a diagram of dependence of the influence of rate of cord yarn moved through the reactor and of monomer propane-butane flow rate on the values of adhesion strength at static conditions of polyester cord to rubber compound at the supplied voltage of 20 kV.
Fig. 4b) shows a diagram of dependence of the influence of rate of cord yarn moved through the reactor and of monomer propane-butane flow rate on the values of adhesion strength after dynamic stress of polyester cord to rubber compound at the supplied voltage of 20 kV.
Fig. 5 shows the dependence of adhesion strength of cord textile fabric to rubber on the time of activation in plasma generated by means of dielectric barrier discharge.

### Examples of invention embodiments

The treatment of textile fibers, cord yarns and textile fabrics by application of low temperature plasma in the process of plasma polymerization at atmospheric pressure under elimination of any preadhesive or adhesive treatment may be realized:
- by means of pulse corona discharge,
- by means of dielectric barrier discharge.

### A) Modification of polyester cords by plasma polymerization generated by pulse corona discharge

In modification of polyester cord yarns, plasma polymerization initiated by pulse plasma was used. Plasma was generated by a source of high voltage which was interrupted to the required frequency by a double rotary spark gap. The distance of hollow electrodes was 1 cm and setting parameters of the plasma reactor source were as follows: voltage in the range of 20 kV to 50 kV, current of 1.4 mA and frequency of the double rotary spark gap, which interrupted the voltage, was 20 Hz.

In the course of plasma polymerization thin polymeric film from the reaction gases is formed directly at the substrate surface. A mixture of technical propane-butane with technical nitrogen was used as the reaction gas. The cord yarns were moved through the reactor at a rate of 1 to 20 m/min, which for the electrode distance of 1 cm corresponds to the time of the contact between the cord and plasma of 0.03 to 0.6 s. Before the actual cord activation by plasma, lubricants used in the production of the cord yarns were removed from the cord surface by rinsing with acetone and treating by ultrasound for 5 minutes and subsequent drying for 30 minutes at a temperature of 80 °C.

### B) Treatment of textile fibers, cord yarns or textile fabrics by treating with low temperature plasma in the process of plasma polymerization at atmospheric pressure with elimination of any other preadhesive or adhesive treatment by means of coplanar dielectric barrier discharge.

Henley test was used to observe the values of static adhesion strength and adhesion strength after dynamic stress (dynamic adhesion) of cords to rubber for the cords modified by plasma polymerization, which values are shown for the following examples. Each example consists of at least 6 measurements and the graph shows their average value together with the standard deviation.

### Example 1

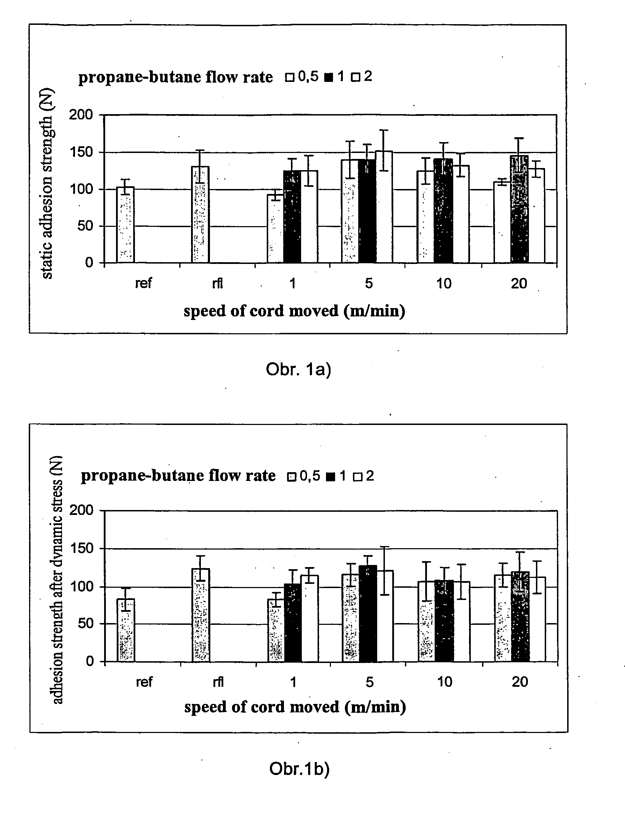

Fig. 1a) shows a graphical representation of the influence of rate of the polyester cord moving through the reactor and of various concentrations of the monomer on the values of static adhesion strength under the supplied voltage of 50 kV. Columns 1, 5, 10, 20 represent the achieved values of adhesion, measured for the samples modified by plasma polymerization when moved the cord through the reactor at a rate of 1, 5, 10 or 20 m/min and at a flow rate for propane-butane of 0.5, 1 and 2 l/min. From the measured results it follows that plasma polymerization by propane-butane in a mixture with nitrogen allows to achieve an increase in static adhesion strength of polyester cords to rubber mix compared with the reference sample (ref) to at least the required level of adhesion achieved by a standard surface treatment by the RFL system (rfl).
Fig. 1b) shows graphical representation of the influence of rate of the polyester cord moving through the reactor and of various concentrations of the monomer on the values of adhesion strength after dynamic stress under the supplied voltage of 50 kV. Plasma polymerization results again in an increase of adhesion strength after dynamic stress compared with the reference sample (ref) to values comparable to the values measured for the samples, which were treated by the RFL system (rfl).

### Examples 2 to 4

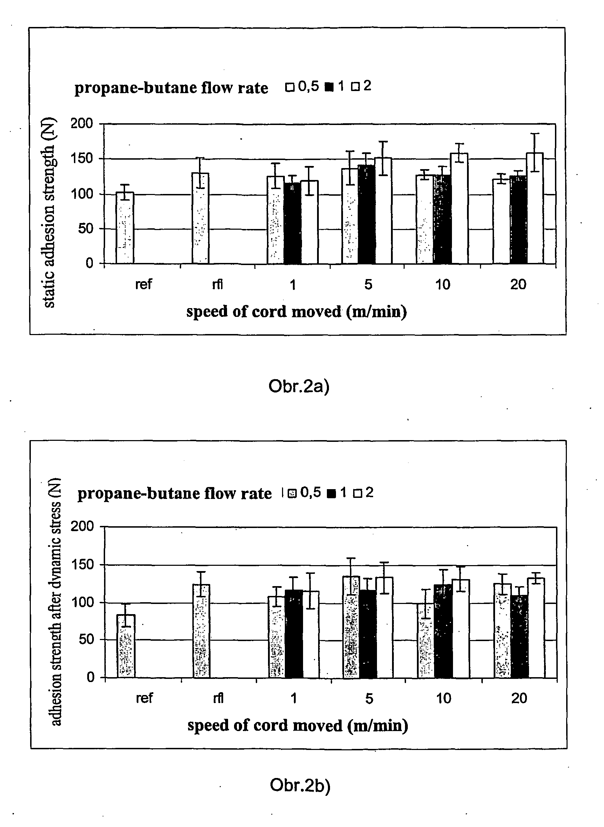

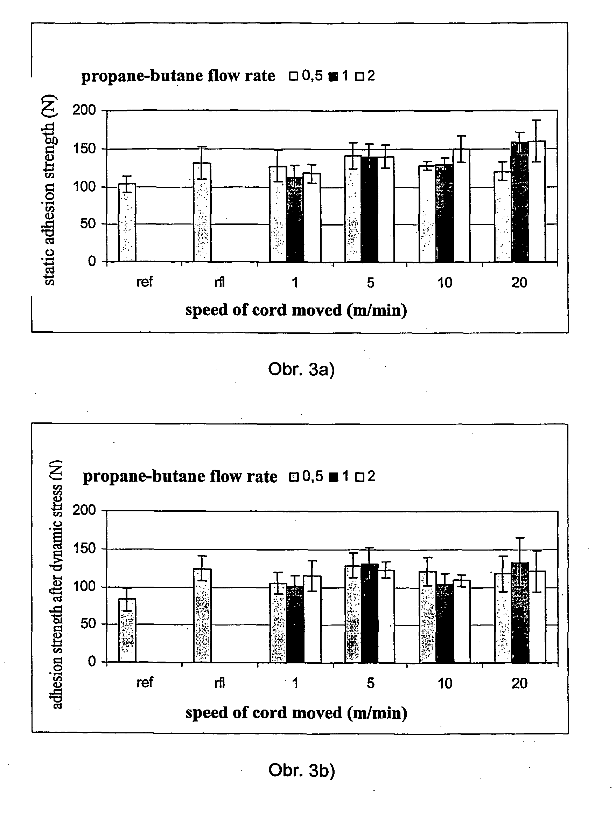

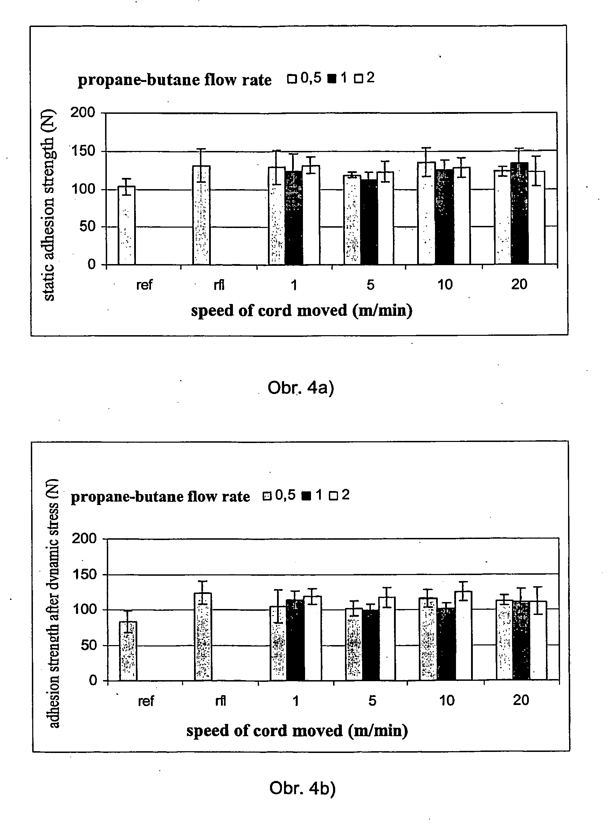

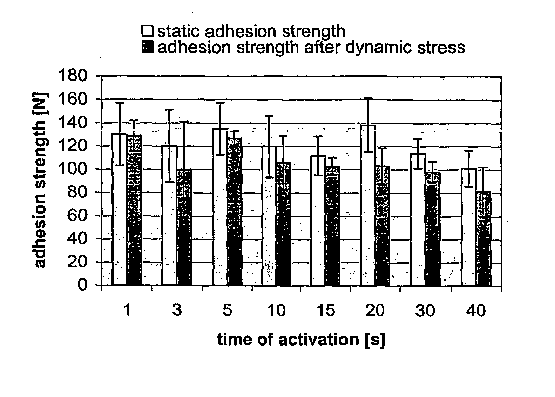

Similar results were observed also in the case when using the supplied voltage of 40 kV, which are graphical illustrated in Fig. 2a) and 2b), 30 kV, which are graphical illustrated in Fig. 3a) and 3b), and 20 kV, which are graphical illustrated in Fig. 4a) and 4b).

From the measured results, it is obvious that in consequence of plasma polymerization deposition of a propane-butane film on the surface of polyester cords occurs, which influencing the increase of values of the static and dynamic adhesion strength to rubber to such values which are comparable to those of a sample treated by the RFL system (rfl). The highest value of static adhesion strength was reached for the sample which was activated by plasma generated at the source voltage of 30 kV, the flow rate for the monomeric medium (propane-butane) of 2 l/min, and the rate of cord moving through the reactor of 20 m/min (Fig. 3A). The static adhesion strength increase represents 22 % relative to the sample modified by standard RFL method. The maximum value of adhesion strength after dynamic stress of the cord to rubber has reached a level of 101% of the RFL sample. Such values of dynamic adhesion strength were reached for polyester cords, moved through the reactor at the rete of 5 m/min at the flow rate for propane-butane of 0.5 l/min and the source voltage for the plasma reactor of 40 kV (Fig. 2B).

As can be seen in diagrams of the obtained adhesion values (Figs. 1a, 1b, 2a, 2b, 3a, 3b, 4a, 4b), increasing the flow rate for the monomeric medium leads to an increase of the values of static and dynamic adhesion strength of the cord threads to rubber compound, wherein obviously in several cases the adhesion values for the cords treated in this way are even higher than those for the cords after chemical treatment by the RFL system. Therefore, it is possible to state that the values of adhesion for the cords treated in the process of plasma polymerization exhibit comparable, in some cases higher adhesion values than those for the case of cords chemically surface treated by the RFL system.

Using the surface treatment of polyester cords by plasma polymerization generated by pulse corona discharge in reactive gas (a mixture of nitrogen and propane-butane), it is possible to achieve comparable level of adhesion to rubber as achieved by means of surface treatment by the RFL system.

### Example 5

Results of the obtained adhesion values at a flow rate for the monomeric medium - propane-butane of 0.5 l.min⁻¹ and a constant flow rate for nitrogen of 3 l.min⁻¹ are presented in graphical form (Fig. 5) for different time of activation. As can be seen from the diagram of the obtained adhesion values, the influence of low temperature plasma in the process of plasma polymerization at atmospheric pressure by means of coplanar dielectric barrier discharge on cord textile fabrics has manifested itself in values of adhesion strength to rubber compound comparable to those obtained in the case of using chemical treatment by the RFL system. In the case of 20 second activation the value of static adhesion strength was even higher than the adhesion values for the cords after chemical treatment by the RFL system. The dashed line in the diagram denotes the adhesion value when chemical treatment by the RFL system was used.

### Industrial applicability

Surface adhesive treatment of textile reinforcing materials by low temperature plasma in the process of plasma polymerization at atmospheric pressure may be used as a part of the production process for tires, conveyor belts, products of technical rubber and V-belts, where the plasma reactor constitutes a part of rubberizing line.

## Claims

1. Method of treatment of textile reinforcing materials with the aim to increase their adhesion to rubber compound for application in tires, conveyor belts, as well as for products of technical rubber and V-belts, by low temperature plasma at atmospheric pressure, **characterized in that**
the textile material is treated, without any preliminary preadhesive treatment, by low temperature plasma generated at atmospheric pressure in a plasma chamber, into which a gas mixture of propane-butane with nitrogen is fed, while plasma polymerization of propane-butane and deposition of a polymer layer at the surface of the treated textile material take place.

2. Method according to claim 1, **characterized in that** low temperature plasma is generated by means of corona discharge.

3. Method according to claim 1, **characterized in that** low temperature plasma is generated by means of coplanar dielectric barrier discharge.

4. Method according to claim 1, **characterized in that** the flow rate of propane-butane is 0.1 to 20 l/min.

5. Method according to claim 1, **characterized in that** the flow rate of nitrogen is 1 to 30 l/min.

6. Method according to claim 2, **characterized in that** the treated material are single cord yarns.

7. Method according to claim 3, **characterized in that** the treated material are textile fabrics or single cord yarns.

8. Method according to claim 6, **characterized in that** the treated material is moved through the plasma reactor at constant rate.

9. Method according to claim 7, **characterized in that** the material is treated in the plasma reactor under static conditions.

## Patentansprüche

1. Das Bearbeitungsverfahren von versteiften Textilmaterialien, zwecks Erhöhung der Adhäsion zum Gummigemisch, für die Applikation in Autoreifen, Förderbänder und auch für Erzeugnisse aus technischem Gummi und Keilriemen, mit Niedertemperatur-Plasma bei atmosphärischem Druck, zeichnet sich **dadurch** aus, dass das Textilmaterial ohne jegliche vorhergehende Voradhäsionsbearbeitung mit generiertem Niedertemperatur- Plasma bei atmosphärischem Druck in der Plasma-Kammer behandelt wird, in die ein Gasgemisch Propan-Butan und Stickstoff eingeleitet wird, wobei es zur Plasmapolymerisation Propan-Butan und Lagerung der Polymerschicht auf der Oberfläche des versteiften Textilmaterials kommt.

2. Das Verfahren gemäß Anspruch 1 zeichnet sich **dadurch** aus, dass sich das Niedertemperatur-Plasma mit Hilfe der Koronaentladung generiert.

3. Das Verfahren gemäß Anspruch 1 zeichnet sich **dadurch** aus, dass sich das Niedertemperatur-Plasma mit Hilfe der koplanaren dielektrischen Barrierenentladung generiert.

4. Das Verfahren gemäß Anspruch 1 zeichnet sich **dadurch** aus, dass die Propan-Butan Durchflussmenge 0,1 bis 20 l/min beträgt.

5. Das Verfahren gemäß Anspruch 1 zeichnet sich **dadurch** aus, dass die Stickstoff Durchflussmenge 1 bis 30 l/min beträgt.

6. Das Verfahren gemäß Anspruch 2 zeichnet sich **dadurch** aus, dass das bearbeitete Material Single Cordfäden sind.

7. Das Verfahren gemäß Anspruch 3 zeichnet sich **dadurch** aus, dass das bearbeite Material flächenhafte Textilgewebe oder Single Cordfäden sind.

8. Das Verfahren gemäß Anspruch 6 zeichnet sich **dadurch** aus, dass das bearbeitete Material mit einer konstanten Geschwindigkeit durch den Plasma-Reaktor gezogen wird.

9. Das Verfahren gemäß Anspruch 4 zeichnet sich **dadurch** aus, dass das Material im Plasma-Reaktor unter statischen Bedingungen bearbeitet wird.

## Revendications

1. La méthode du traitement des renforts textiles, dans le but d'augmenter l'adhésion dans le caoutchouc pour l'application dans les pneus, bandes transporteuses, ainsi que pour les produits en caoutchouc technique et les courroies crantées, par le plasme à basse température sous pression atmosphérique, **caractérisée en ce que** sur le matériel textile est appliqué, sans traitement préadhésif préalable, le plasme à basse température généré sous pression atmosphérique dans une chambre à plasme dans laquelle le mélange du propane-butane et du nitrogène est amené, ayant pour résultat la polymérisation plasmique du propane-butane et le dépôt d'une couche de polymère à la surface du renfort textile.

2. La méthode selon la revendication 1 est **caractérisée en ce que** le plasme à basse température est généré par une décharge coronaire.

3. La méthode selon la revendication 1 est **caractérisée en ce que** le plasma à basse température est généré par une décharge à barrière diélectrique coplanaire.

4. La méthode selon la revendication 1 est **caractérisée en ce que** le débit du propane-butane est de 0,1 à 20 l/min.

5. La méthode selon la revendication 1 est **caractérisée en ce que** le dàbit du nitrogène est de 1 à 30 l/min.

6. La méthode selon la revendication 2 est **caractérisée en ce que** le matériel traité représentent les fibres textiles single.

7. La méthode selon la revendication 3 est **caractérisée en ce que** le matériel traité représente le tissu textile plat ou les fibres textiles single.

8. La méthode selon la revendication 6 est **caractérisée en ce que** le matériel traité est tiré à la vitesse constante à travers le réacteur plasmique.

9. La méthode selon la revendication 7 est **caractérisée en ce que** le traitement du matériel est assuré dans un réacteur plasmique sous conditions statiques.
